# EUROPEAN PATENT APPLICATION

(11) **EP 4 811 512 A1**
(43) Date of publication of application: **23.09.2026**
(21) Application number: 24891438.4
(22) Date of filing: 13.11.2024
(51) Int. Cl.: H01M 50/204, H01G 11/18, H01G 11/78, H01M 50/209, H01M 50/291, H01M 50/342, H01M 50/35, H01M 50/358, H01M 50/507, H01M 50/55

(54) **ENERGY STORAGE DEVICE**

(30) Priority: 14.11.2023 JP 2023193839
(71) Applicant: GS Yuasa International Ltd., Kisshoin, Minami-ku, Kyoto-shi, Kyoto 601-8520 (JP); Blue Energy Co., Ltd., Kyoto-shi, Kyoto 601-8520 (JP)
(72) Inventor: NAKAMURA, Hiromu, Kyoto-shi, Kyoto 601-8520 (JP); YUASA, Eiji, Kyoto-shi, Kyoto 601-8520 (JP); TOSHIOKA, Yoshimasa, Kyoto-shi, Kyoto 601-8520 (JP)
(74) Representative: Isarpatent
(86) International application number: PCT/JP2024/040362
(87) International publication number: WO 2025/105402

(57) **Abstract**

An energy storage apparatus of the present embodiment includes: a plurality of energy storage devices including terminals and gas release valves disposed at an interval in a second direction orthogonal to a first direction at an end on one side of the first direction, the plurality of energy storage devices being arranged in a third direction orthogonal to each of the first direction and the second direction; a duct portion overlapping the gas release valves from the one side of the first direction and extending along the third direction; a busbar holding member having a housing portion that houses busbars connecting the terminals of the energy storage devices to each other, the busbar holding member being overlapped on the plurality of energy storage devices from the one side of the first direction; and a temperature detection portion capable of detecting a temperature of the energy storage devices from the one side of the first direction. The housing portion and the duct portion are arranged in the second direction such that the temperature detection portion is located therebetween, and a restriction portion that restricts movement of the temperature detection portion toward a duct portion side in the second direction is configured by at least a part of the duct portion.

## Description

### CROSS-REFERENCE TO RELATED APPLICATIONS

This application claims priority to Japanese Patent Application No. 2023-193839, the content of which is incorporated herein by reference in its entirety.

### TECHNICAL FIELD

The present invention relates to an energy storage apparatus including a plurality of energy storage devices.

### BACKGROUND ART

Patent Literature 1 discloses an assembled battery provided with a thermistor. As illustrated in FIG. 20, this assembled battery 500 includes a battery stack 510 and a busbar module 520.

The battery stack 510 is configured by stacking flat-plate-shaped battery cells 511. The plurality of battery cells 511 are electrically connected in series. A positive electrode terminal 513a and a negative electrode terminal 513b protrude from an upper surface of an outer case 512 of each battery cell 511.

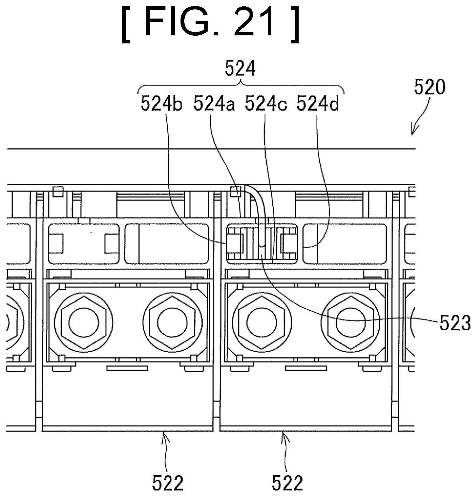

The busbar module 520 is provided on an upper surface of the battery stack 510. The busbar module 520 includes a busbar, a cell voltage detection line, a smoke exhaust duct 521, a plurality of busbar cases 522, and a thermistor 523 (see FIG. 21) that detects a temperature of the battery cell 511.

A battery monitoring board 525 is disposed on an upper surface of the smoke exhaust duct 521. The smoke exhaust duct 521 is a longitudinal member extending in a stacking direction of the battery cells 511. The smoke exhaust duct 521 has a U-shaped cross-section when viewed in the stacking direction. An internal space of the smoke exhaust duct 521 also functions as a duct for discharging gas generated from the battery cells 511.

The plurality of busbar cases 522 are respectively disposed on both sides of the smoke exhaust duct 521 along rows of the positive electrode terminals 513a and the negative electrode terminals 513b of the battery cells 511. Collections of the plurality of busbar cases 522 engage with both ends of the smoke exhaust duct 521 to constitute an integrated busbar module 520.

As illustrated in FIG. 21, the busbar case 522 includes an attachment portion 524 having a structure allowing the thermistor 523 to be attached and detached. This attachment portion 524 is configured by four wall portions 524a, 524b, 524c, and 524d. These four wall portions 524a, 524b, 524c, and 524d surround a periphery of the thermistor 523.

The thermistor 523 is a temperature detection element that detects a temperature of the battery cell 511. The thermistor 523 brings its lower part into contact with the target object to detect a temperature of a target object. Then, the thermistor 523 transmits detected temperature information to the battery monitoring board 525 via a communication line.

During use of the assembled battery 500 described above, the thermistors 523 manage the temperatures of the battery cells 511 by detecting the temperatures of the battery cells 511.

In recent years, downsizing has been required even for energy storage apparatuses described above which are capable of temperature management of the energy storage devices during use.

### CITATION LIST

### Patent Literature

Patent Literature 1: Japanese Unexamined Patent Application Publication No. 2017-004803

### DISCLOSURE OF INVENTION

### PROBLEMS TO BE SOLVED BY THE INVENTION

The present embodiment aims to provide an energy storage apparatus with reduced dimensions in a width direction.

### MEANS FOR SOLVING THE PROBLEMS

An energy storage apparatus of the present embodiment includes: a plurality of energy storage devices including terminals and gas release valves disposed at an interval in a second direction orthogonal to a first direction at an end on one side of the first direction, the plurality of energy storage devices being arranged in a third direction orthogonal to each of the first direction and the second direction; a duct portion overlapping the gas release valves from the one side of the first direction and extending along the third direction; a busbar holding member having a housing portion that houses busbars connecting the terminals of the energy storage devices to each other, the busbar holding member being overlapped on the plurality of energy storage devices from the one side of the first direction; and a temperature detection portion capable of detecting a temperature of the energy storage devices from the one side of the first direction, in which the housing portion and the duct portion are arranged in the second direction such that the temperature detection portion is located therebetween; and a restriction portion that restricts movement of the temperature detection portion toward a duct portion side in the second direction is configured by at least a part of the duct portion.

An energy storage apparatus of an other embodiment includes: a plurality of energy storage devices including terminals disposed at an end on one side of a first direction, the plurality of energy storage devices being arranged in a third direction orthogonal to the first direction; an adjacent member having a main body disposed between the energy storage devices adjacent in the third direction and a convex portion extending from the main body toward the one side of the first direction; a busbar holding member having a housing portion that houses busbars connecting the terminals of the energy storage devices to each other, the busbar holding member being overlapped on the plurality of energy storage devices from the one side of the first direction; and a temperature detection portion capable of detecting a temperature of the energy storage devices from the one side of the first direction, in which the housing portion and the convex portion are arranged in a second direction orthogonal to each of the first direction and the third direction such that the temperature detection portion is located therebetween; and a restriction portion that restricts movement of the temperature detection portion in a direction away from the housing portion in the second direction is configured by at least the convex portion.

### BRIEF DESCRIPTION OF DRAWINGS

FIG. 1 is a perspective view of an energy storage apparatus according to the present embodiment.
FIG. 2 is a view of the energy storage apparatus from one side of a Z-axis direction, illustrating a state in which a lid portion on one side of a busbar holding member is open.
FIG. 3 is an exploded perspective view of the energy storage apparatus.
FIG. 4 is a perspective view of an apparatus main body in a state where a duct portion is attached.
FIG. 5 is a view of the apparatus main body in the state where the duct portion is attached, from one side of the Z-axis direction.
FIG. 6 is an exploded perspective view of the apparatus main body.
FIG. 7 is a perspective view of a first adjacent member of the apparatus main body.
FIG. 8 is a perspective view of a second adjacent member of the apparatus main body.
FIG. 9 is a perspective view of a third adjacent member of the apparatus main body.
FIG. 10 is a view of the duct portion from a Y-axis direction.
FIG. 11 is a view of the duct portion from an other side of the Z-axis direction.
FIG. 12 is an enlarged view of a range indicated by XII in FIG. 4.
FIG. 13 is an enlarged view of a range indicated by XIII in FIG. 5.
FIG. 14 is an enlarged view of a range indicated by XIV in FIG. 2.
FIG. 15 is a cross-sectional view taken along line XV-XV in FIG. 14.
FIG. 16 is an enlarged perspective view of a range indicated by XVI in FIG. 2 in a plate portion included in the energy storage apparatus, from the one side of the Z-axis direction, illustrating a state where a lid portion is open.
FIG. 17 is an enlarged perspective view of the range indicated by XVI in FIG. 2 in the plate portion, from the other side of the Z-axis direction, illustrating the state where the lid portion is open.
FIG. 18 is an enlarged perspective view of a sensor holding portion and its periphery in a state where a temperature detection portion is disposed.
FIG. 19 is an enlarged perspective view of the sensor holding portion and its periphery in a state where the temperature detection portion is removed.

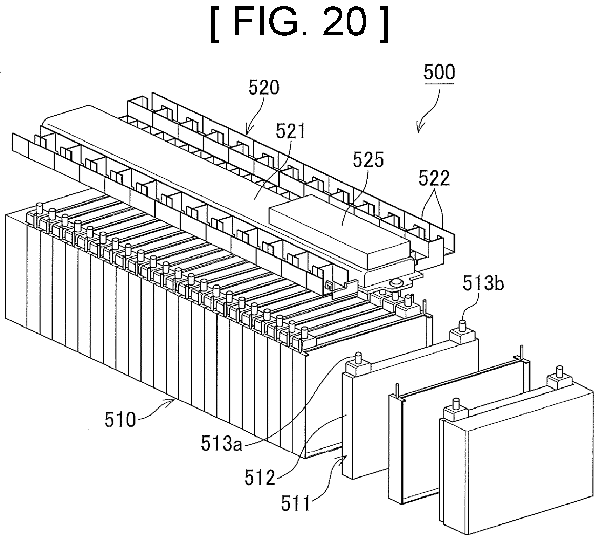

FIG. 20 is an exploded perspective view of a conventional assembled battery.
FIG. 21 is an enlarged view of a thermistor and its periphery in a busbar module of the assembled battery.

### DESCRIPTION OF EMBODIMENTS

(1) An energy storage apparatus according to an embodiment of the present invention includes: a plurality of energy storage devices having gas release valves and terminals disposed at an interval in a second direction orthogonal to a first direction at an end on one side of the first direction, the plurality of energy storage devices being arranged in a third direction orthogonal to each of the first direction and the second direction; a duct portion overlapping the gas release valves from the one side of the first direction and extending along the third direction; a busbar holding member having a housing portion that houses busbars connecting the terminals of the energy storage devices to each other, the busbar holding member being overlapped on the plurality of energy storage devices from the one side of the first direction; and a temperature detection portion capable of detecting a temperature of the energy storage devices from the one side of the first direction. The housing portion and the duct portion are arranged in the second direction such that the temperature detection portion is located therebetween (the temperature detection portion is disposed between the housing portion and the duct portion in the second direction). A restriction portion that restricts movement of the temperature detection portion toward a duct portion side in the second direction is configured by at least a part of the duct portion.

According to the energy storage apparatus of an embodiment of the present invention, by utilizing a part of the duct portion as a restriction portion, movement of the temperature detection portion toward the duct portion side in the second direction (a direction toward the duct portion in the second direction) can be restricted without separately providing such restriction portion. For this reason, a dimension in the second direction (width direction) of a combination of the duct portion and the busbar holding member can be reduced. According to the energy storage apparatus described in the above (1), an energy storage apparatus with reduced dimensions in the width direction can be provided.

(2) In the energy storage apparatus described in the above (1), a configuration is possible in which an adjacent member is provided, the adjacent member having a main body disposed between the energy storage devices adjacent in the third direction and a convex portion extending from the main body toward the one side of the first direction, the convex portion is disposed between the temperature detection portion and the duct portion in the second direction, and the restriction portion includes the convex portion.

According to the energy storage apparatus described in the above (2), movement of the temperature detection portion toward the duct portion side in the second direction (the direction toward the duct portion in the second direction) is restricted not only by the duct portion but also by the convex portion of the adjacent member.

(3) An energy storage apparatus according to an other embodiment of the present invention includes: a plurality of energy storage devices having terminals disposed at an end on one side of a first direction, the plurality of energy storage devices being arranged in a third direction orthogonal to the first direction; an adjacent member having a main body disposed between the energy storage devices adjacent in the third direction and a convex portion extending from the main body toward the one side of the first direction; a busbar holding member having a housing portion that houses busbars connecting the terminals of the energy storage devices to each other, the busbar holding member being overlapped on the plurality of energy storage devices from the one side of the first direction; and a temperature detection portion capable of detecting a temperature of the energy storage devices from the one side of the first direction, in which the housing portion and the convex portion are arranged in a second direction orthogonal to each of the first direction and the third direction such that the temperature detection portion is located therebetween, and a restriction portion that restricts movement of the temperature detection portion in a direction away from the housing portion in the second direction is configured by at least the convex portion.

According to the energy storage apparatus described in the above (3), by utilizing a part (convex portion) of the adjacent member as a restriction portion, movement of the temperature detection portion toward a convex portion side in the second direction (a direction toward the convex portion in the second direction) can be restricted without separately providing such restriction portion. For this reason, a space for disposing an other member can be secured on an opposite side of the convex portion from the housing portion in the second direction, and a dimension in the second direction (width direction) of a combination of the convex portion and the busbar holding member can be reduced. According to the energy storage apparatus described in (3), an energy storage apparatus with reduced dimensions in the width direction can be provided.

(4) The energy storage apparatus described in the above (3) may have a configuration of including a duct portion, in which the energy storage device includes a gas release valve disposed at the end on the one side of the first direction, at an interval from the terminal toward the convex portion side of the second direction, the duct portion overlaps the gas release valve from the one side of the first direction and extends along the third direction, and is disposed at a position adjacent to the convex portion such that the convex portion is located between the housing portion and the duct portion in the second direction, and the restriction portion includes a part of the duct portion.

According to the energy storage apparatus described in the above (4), movement of the temperature detection portion toward the convex portion side in the second direction (the direction toward the convex portion in the second direction) is restricted not only by the convex portion of the adjacent member but also by the duct portion.

(5) The energy storage apparatus described in the above (2) or (4) may have a configuration in which the duct portion includes a wall portion extending along a direction orthogonal to the second direction and an engaged convex portion protruding from the wall portion toward the housing portion side, and the convex portion restricts movement of the duct portion toward the one side of the first direction with respect to the adjacent member by engaging with the engaged convex portion.

According to the energy storage apparatus described in the above (5), by utilizing a portion of the adjacent member that restricts movement of the duct portion toward the one side of the first direction with respect to the adjacent member, movement of the temperature detection portion toward the duct portion side in the second direction (the direction toward the duct portion in the second direction) can be restricted.

(6) In the energy storage apparatus described in the above (5), a first restriction surface of the engaged convex portion facing the housing portion side in the second direction and a second restriction surface of the convex portion facing the housing portion side in the second direction may constitute a restriction surface that restricts movement of the temperature detection portion toward the duct portion side in the second direction.

According to the energy storage apparatus described in the above (6), a contact area with the temperature detection portion is easily secured by restricting movement of the temperature detection portion with a surface (restriction surface). Accordingly, movement of the temperature detection portion toward the duct portion side in the second direction (the direction toward the duct portion in the second direction) can be effectively restricted.

(7) In the energy storage apparatus described in the above (6), the first restriction surface and the second restriction surface may be flush (a flat surface without a step).

According to the energy storage apparatus described in the above (7), the contact area between the temperature detection portion and the restriction surface is even more easily secured. Accordingly, movement of the temperature detection portion toward the duct portion side in the second direction (the direction toward the duct portion in the second direction) can be even more effectively restricted.

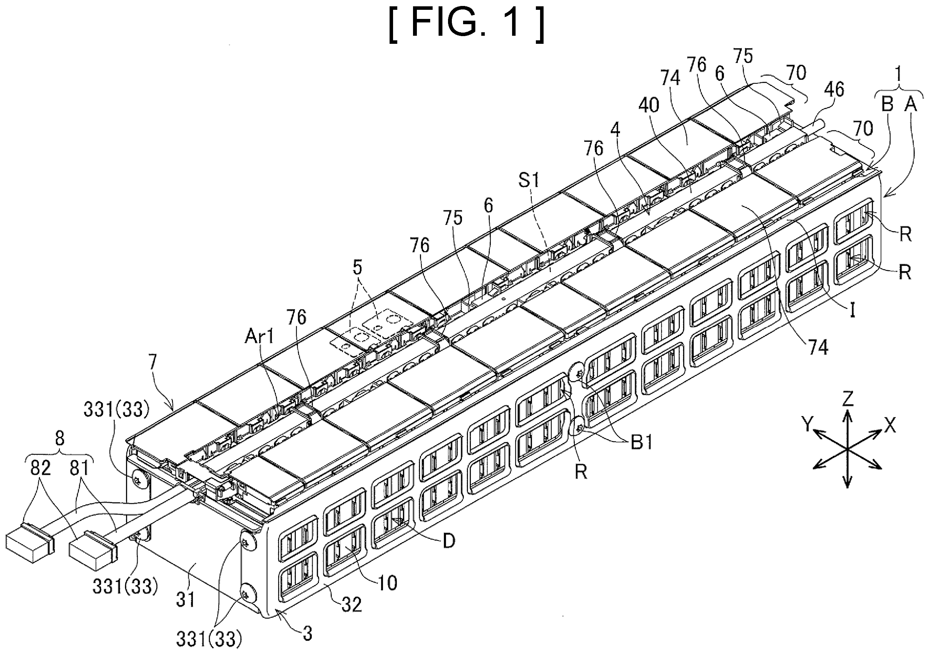

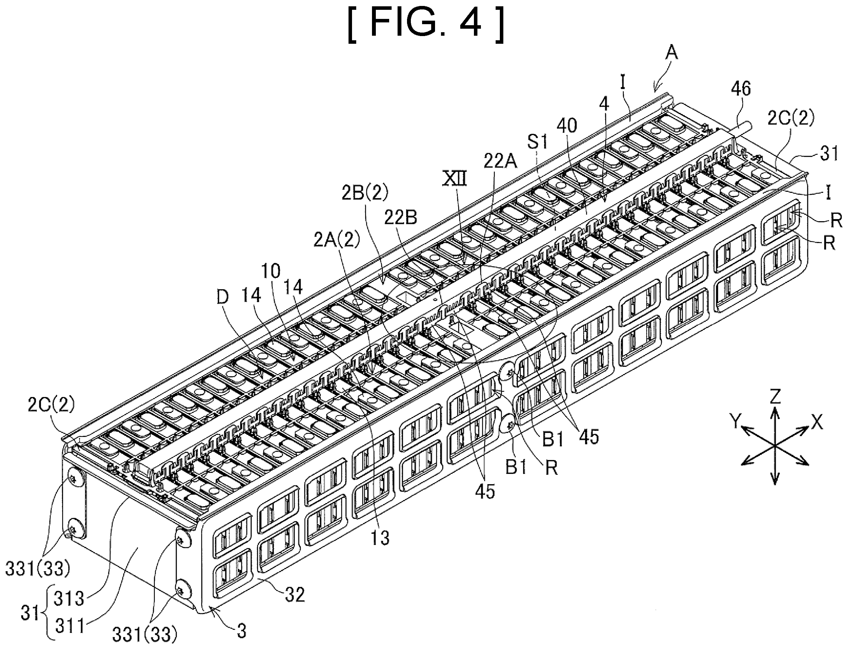

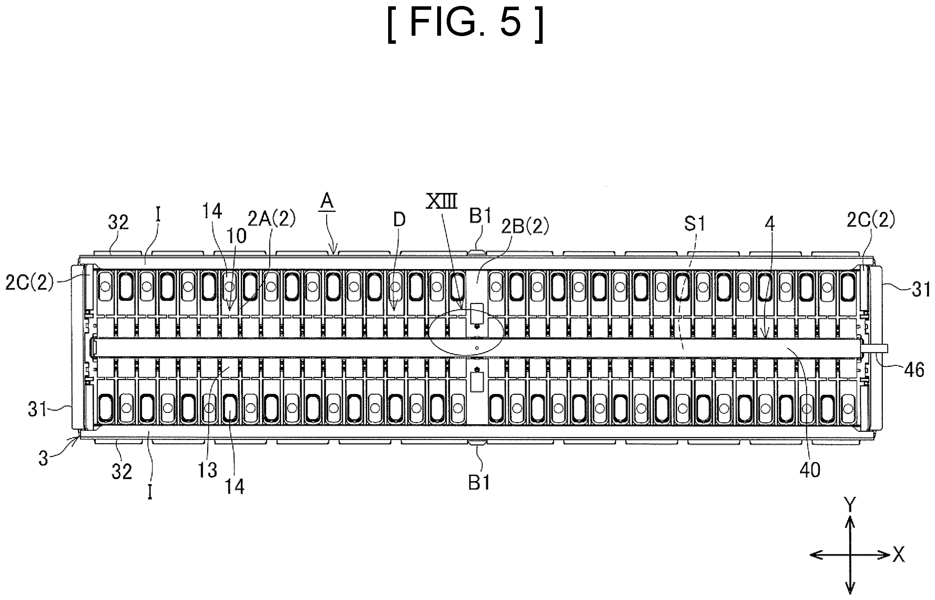

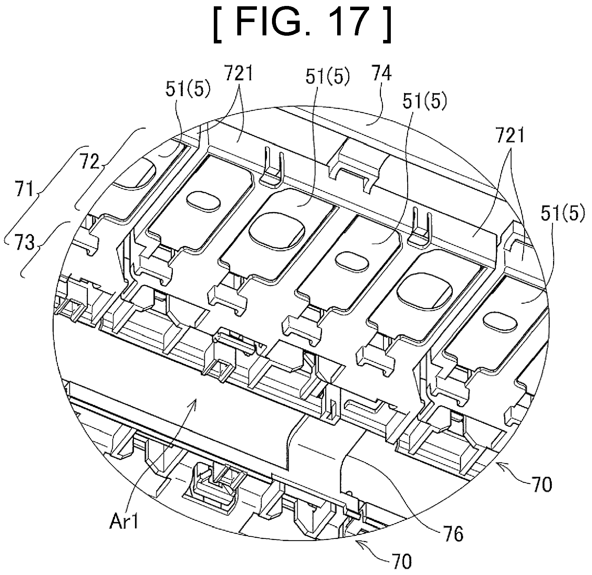

An embodiment of the present invention will be described with reference to FIGS. 1 to 19. Names of components (constituent elements) in the present embodiment are those in the present embodiment and may differ from names of components (constituent elements) in the background art.

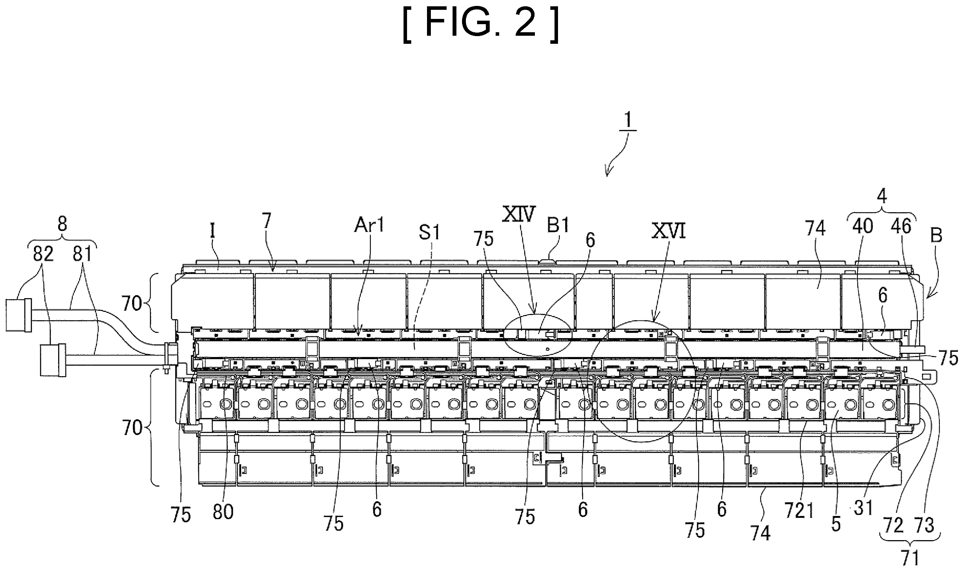

As illustrated in FIGS. 1 to 6, an energy storage apparatus 1 of the present embodiment includes a plurality of energy storage devices 10 having gas release valves 132 and arranged in a predetermined direction (third direction), a duct portion 4 overlapping the gas release valves 132 and extending in the predetermined direction, a busbar holding member 7 having a housing portion 71 housing busbars 5 (see FIG. 2) and overlapped on the plurality of energy storage devices 10, and temperature detection portions 6 capable of detecting temperatures of the energy storage devices 10.

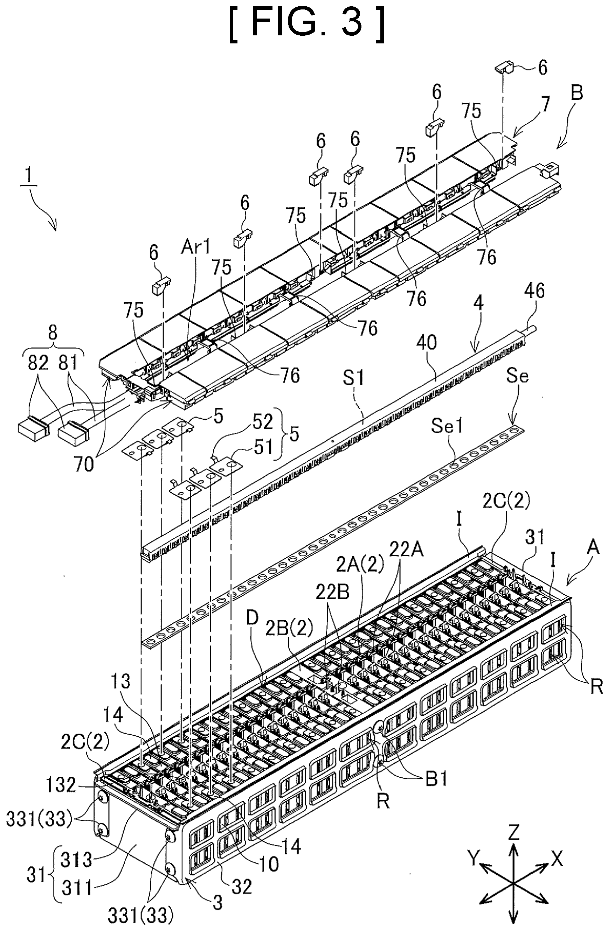

The energy storage apparatus 1 includes an apparatus main body A including the plurality of energy storage devices 10, the duct portion 4 attached to the apparatus main body A, and a plate portion B overlapped on a portion of the apparatus main body A where the duct portion 4 is attached. The energy storage apparatus 1 of the present embodiment also includes a seal portion Se disposed between the apparatus main body A and the duct portion 4 (see FIG. 3). Hereinafter, the predetermined direction (third direction) in which the energy storage devices 10 are arranged is an X-axis direction of a Cartesian coordinate system, a direction in which the apparatus main body A and the plate portion B are arranged (first direction) is a Z-axis direction of the Cartesian coordinate system, and a direction orthogonal to each of the X-axis direction and the Z-axis direction is a Y-axis direction (second direction) of the Cartesian coordinate system.

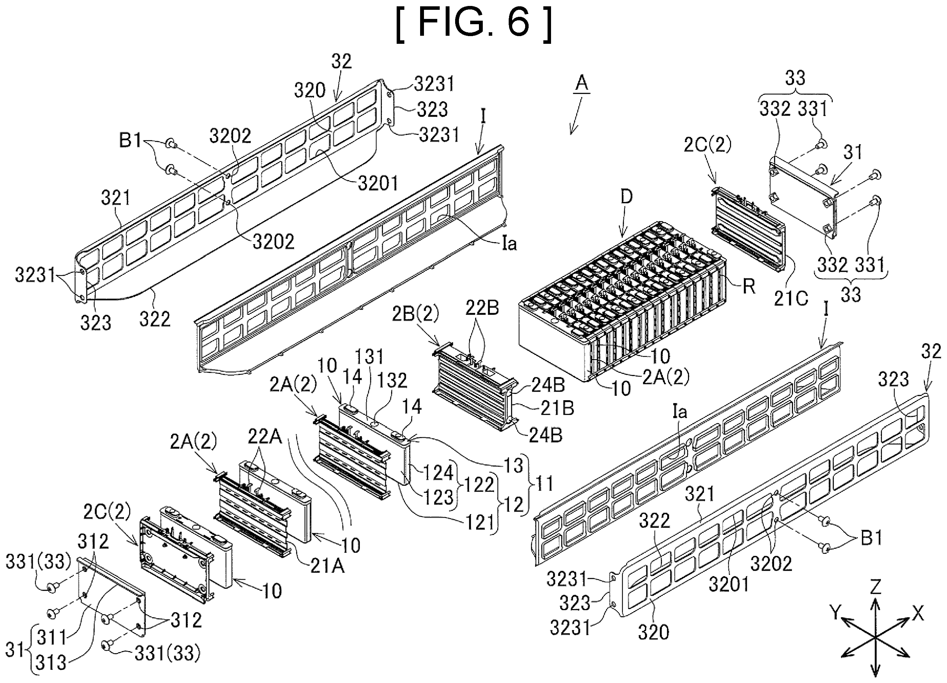

The apparatus main body A includes a stack D (see FIG. 6) having the plurality of energy storage devices 10 and a plurality of adjacent members 2, the plurality of energy storage devices 10 and the plurality of adjacent members 2 being alternately arranged in the X-axis direction, and a holding portion 3 that holds the stack D. The apparatus main body A includes a first fixing portion B1 that fixes at least one adjacent member 2 to the holding portion 3, and an insulator I that insulates between the stack D and the holding portion 3.

The plurality of energy storage devices 10 are a primary battery, a secondary battery, a capacitor, or the like. The energy storage device 10 of the present embodiment is a non-aqueous electrolyte secondary battery capable of charging and discharging. Specifically, the energy storage device 10 is a lithium ion secondary battery utilizing electron transfer occurring with movement of lithium ions. This energy storage device 10 has a terminal 14 and a gas release valve 132 disposed at an interval in the Y-axis direction at an end on one side of the Z-axis direction (upper side in FIG. 6).

In detail, each energy storage device 10 includes an electrode body, a case 11 housing the electrode body together with an electrolyte solution, a terminal 14 at least a part of which is exposed outside the case 11, and a current collector connecting the electrode body and the terminal 14 (see FIG. 6). The energy storage device 10 of the present embodiment includes a pair of terminals 14, and the pair of terminals 14 are disposed at an interval in the Y-axis direction at the end on the one side of the Z-axis direction in the energy storage device 10.

In the electrode body, positive electrode plates and negative electrode plates are alternately laminated via separators. Lithium ions move between the positive electrode plates and the negative electrode plates in this electrode body, whereby the energy storage device 10 charges and discharges.

The case 11 has a case main body 12 having an opening at the end on the one side of the Z-axis direction, and a plate-shaped cover plate 13 that blocks (closes) the opening of the case main body 12. This case main body 12 has a rectangular cylindrical shape with a closed end on an other side of the Z-axis direction (lower side in FIG. 6) (i.e., a bottomed rectangular cylindrical shape), and the case 11 has a rectangular parallelepiped shape (hexahedral shape).

Specifically, the case main body 12 includes a plate-shaped closing portion 121 and a cylindrical body portion (peripheral wall) 122 extending from a periphery of the closing portion 121 in the Z-axis direction.

The closing portion 121 is a portion located at a lower end of the case main body 12 when the case main body 12 is disposed in a posture with the opening facing upward (i.e., the portion corresponding to a bottom wall of the case main body 12 when the opening faces upward). The closing portion 121 is rectangular when viewed from the Z-axis direction.

The body portion 122 has a rectangular cylindrical shape, specifically, a flat rectangular cylindrical shape. The body portion 122 has a pair of long wall portions 123 extending from long sides of the periphery of the closing portion 121 and a pair of short wall portions 124 extending from short sides of the periphery of the closing portion 121. In this body portion 122, the rectangular cylindrical shaped body portion 122 is formed by the short wall portions 124 connecting ends of the pair of long wall portions 123 facing each other in the X-axis direction.

The cover plate 13 is a plate-shaped member that blocks the opening of the case main body 12. This cover plate 13 has a cover plate main body 131 in a rectangular plate shape and long in the Y-axis direction, and a gas release valve 132 disposed on the cover plate main body 131.

The gas release valve 132 discharges gas to the outside when a pressure in the case 11 exceeds a predetermined value due to generation of the gas in the case 11. The gas release valve 132 of the present embodiment is disposed at a central portion in the Y-axis direction of the cover plate main body 131. The gas release valve 132 of the present embodiment is circular when viewed from the Z-axis direction.

The case 11 is formed by joining this cover plate 13 to the case main body 12 in a state where a peripheral portion of the cover plate 13 is overlapped on a peripheral portion of the opening of the case main body 12.

The pair of terminals 14 are portions electrically connected to terminals 14 of other energy storage devices 10, external equipment, or the like. Each terminal 14 is formed of a conductive member. Each terminal 14 may be formed of a metal material having high weldability, such as an aluminum-based metal material such as aluminum or an aluminum alloy, or a copper-based metal material such as copper or a copper alloy.

The pair of terminals 14 are disposed at both ends in the Y-axis direction of the cover plate 13. That is, the pair of terminals 14 are disposed at positions sandwiching the gas release valve 132 in the cover plate 13. Each terminal 14 is disposed at an interval from the gas release valve 132 in the Y-axis direction.

The energy storage device 10 described above has a flat rectangular parallelepiped shape. The plurality of energy storage devices 10 are arranged in the X-axis direction in a state where wide surfaces (long wall portions 123) of the cases 11 face each other via the adjacent member 2. At this time, the gas release valves 132 of the energy storage devices 10 are arranged in a row in the X-axis direction. One terminal 14 and an other terminal 14 in each energy storage device 10 are arranged in the X-axis direction at respective positions sandwiching the gas release valve 132.

The plurality of adjacent members 2 have insulating properties and are disposed between the energy storage devices 10 arranged in the X-axis direction, or between the energy storage device 10 and a member (in the example of the present embodiment, an end portion 31 which is a part of the holding portion 3) arranged in the X-axis direction with respect to the energy storage device 10. The adjacent member 2 of the present embodiment is formed of a resin having insulating properties. This adjacent member 2 forms a flow path R through which a fluid for temperature adjustment (in the example of the present embodiment, a gas such as air) can circulate between the adjacent member 2 and the adjacent energy storage device 10. The plurality of adjacent members 2 include a plurality of types of adjacent members 2A, 2B, and 2C.

Specifically, the plurality of adjacent members 2 include a first adjacent member 2A disposed between two adjacent energy storage devices 10, a second adjacent member 2B disposed between two adjacent energy storage devices 10 and fixed to the holding portion 3, and a third adjacent member 2C adjacent to the energy storage device 10 at an outermost end in the X-axis direction between the holding portion 3 and the energy storage device 10. That is, the energy storage apparatus 1 includes the first adjacent member 2A, the second adjacent member 2B, and the third adjacent member 2C as the adjacent members 2.

The energy storage apparatus 1 of the present embodiment includes a plurality of first adjacent members 2A, one second adjacent member 2B, and two (a pair of) third adjacent members 2C. The plurality of first adjacent members 2A are disposed between respective energy storage devices 10 except for between the energy storage devices 10 where the second adjacent member 2B is disposed. Among these first to third adjacent members 2A to 2C, at least the first adjacent member 2A and the second adjacent member 2B have main body portions (main bodies) 21A and 21B disposed between the energy storage devices 10 adjacent in the X-axis direction, and engaging pieces (convex portions) 22A and 22B extending from the main body portions 21A and 21B toward the one side of the Z-axis direction (see FIG. 6). These engaging pieces 22A and 22B restrict movement of the duct portion 4 toward the one side of the Z-axis direction with respect to the adjacent members 2A and 2B by engaging with the duct portion 4. Details are as follows.

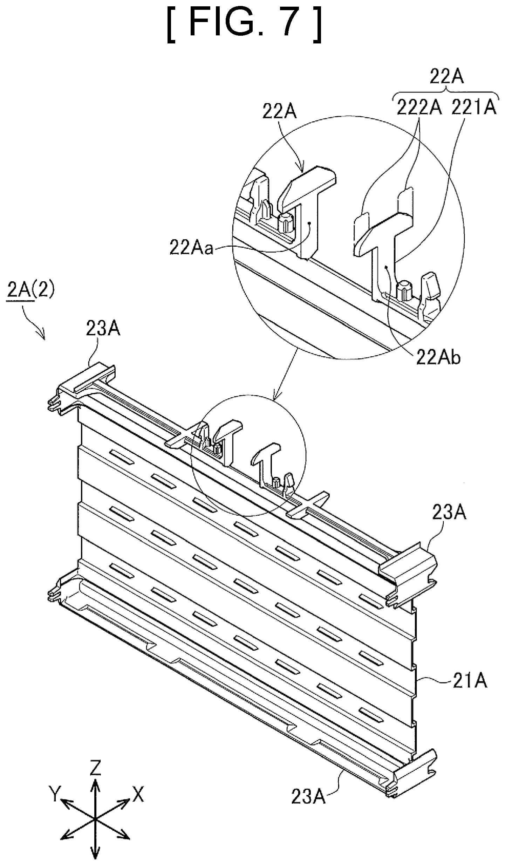

As also illustrated in FIG. 7, the plurality of first adjacent members 2A have a first main body portion 21A located between the energy storage devices 10, and at least one first engaging piece 22A that engages the duct portion 4 with the first main body portion 21A. In the present embodiment, engaging means to stop by engaging, such as by hooking.

Specifically, the first adjacent member 2A includes the first main body portion 21A extending in a surface direction orthogonal to the X-axis direction between the energy storage devices 10 adjacent in the X-axis direction, and two first engaging pieces 22A extending (protruding) from the first main body portion 21A toward the one side of the Z-axis direction and engaging the duct portion 4 to the first main body portion 21A. The first adjacent member 2A has at least one first restriction portion 23A that restricts movement of the energy storage device 10 adjacent to the first main body portion 21A with respect to the first main body portion 21A.

The first main body portion 21A is a portion facing the long wall portion 123 of the case 11 of the energy storage device 10 in a state of being partially in contact therewith. This first main body portion 21A forms, in cooperation with the adjacent energy storage device 10, a flow path R between the first main body portion 21A and the energy storage device 10, through which a fluid for temperature adjustment can circulate. The first main body portion 21A of the present embodiment is in a rectangular plate shape having approximately the same size as the energy storage device 10 when viewed from the X-axis direction, and a cross-sectional shape orthogonal to the Y-axis direction is a rectangular waveform.

The two first engaging pieces 22A respectively extend from positions at an interval in the Y-axis direction at an end on the one side of the Z-axis direction of the first main body portion 21A. The interval in the Y-axis direction between the two first engaging pieces 22A is set according to a dimension in the Y-axis direction of the duct portion 4 and a dimension in the Y-axis direction of the seal portion Se. The two first engaging pieces 22A are in a plate shape with the Y-axis direction as a thickness direction (in other words, a plate shape along a surface direction orthogonal to the Y-axis direction).

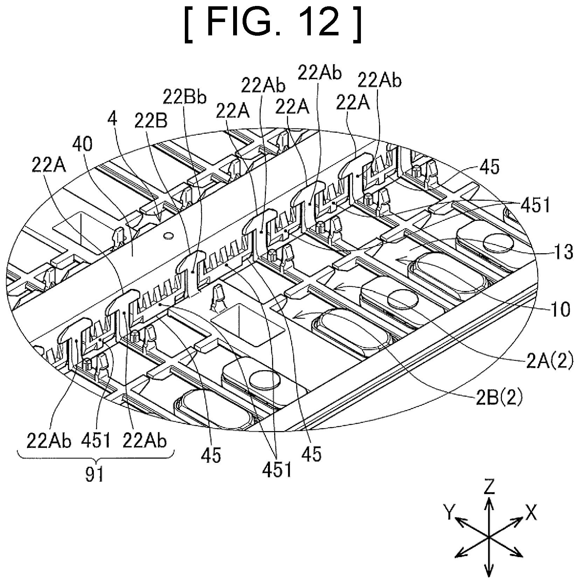

Specifically, the two first engaging pieces 22A have an engaging piece main body 221A extending from the first main body portion 21A in the Z-axis direction along the duct portion 4, and an engaging portion 222A engaging with the duct portion 4 (specifically, an engaged portion 45: see FIG. 12). This first engaging piece 22A has an inner side surface 22Aa facing an inner side of the Y-axis direction (a direction toward the duct portion 4 in the Y-axis direction), and an outer side surface (second restriction surface) 22Ab facing an opposite side to the inner side surface 22Aa.

The engaging piece main body 221A is a strip-shaped portion extending straight from the first main body portion 21A in the Z-axis direction.

The engaging portion 222A is a portion extending in the X-axis direction (a direction in which the duct portion 4 extends) from a position in the engaging piece main body 221A spaced at an interval from the first main body portion 21A toward the one side of the Z-axis direction. The engaging portion 222A of the present embodiment extends from the engaging piece main body 221A toward the one side and an other side of the X-axis direction.

The first restriction portion 23A extends in the X-axis direction from at least a corner portion of the rectangular first main body portion 21A. This first restriction portion 23A restricts relative movement of the energy storage device 10 (specifically, the case 11) with respect to the first main body portion 21A in the surface direction by abutting against the energy storage device 10 adjacent to the first main body portion 21A from an outside in the surface direction orthogonal to the X-axis direction. The first restriction portion 23A of the present embodiment extends from the first main body portion 21A toward the one side and the other side of the X-axis direction.

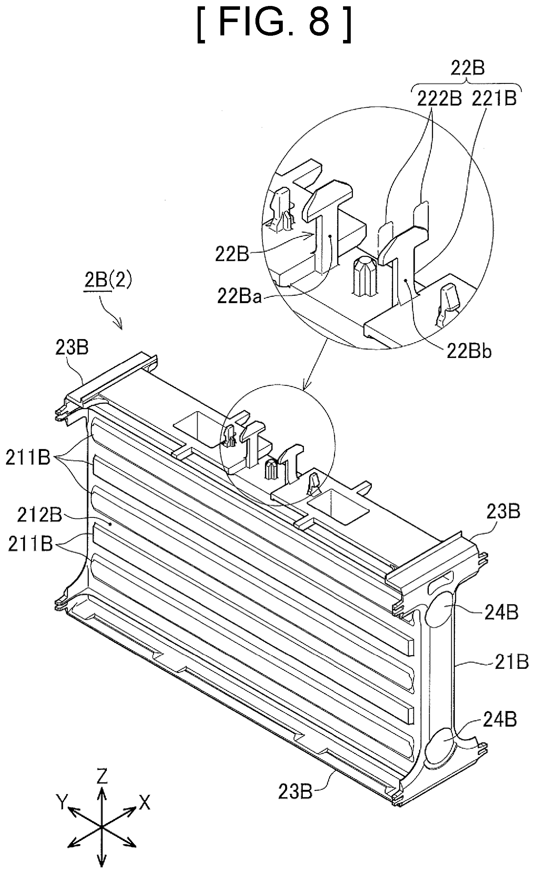

As also illustrated in FIG. 8, the second adjacent member 2B has a second main body portion 21B located between the energy storage devices 10, and at least one second engaging piece 22B that engages the duct portion 4 with the second main body portion 21B.

Specifically, the second adjacent member 2B includes the second main body portion 21B extending in a surface direction orthogonal to the X-axis direction between the energy storage devices 10 adjacent in the X-axis direction, and at least one (in the example of the present embodiment, two) second engaging piece 22B extending (protruding) from the second main body portion 21B toward the one side of the Z-axis direction and engaging the duct portion 4 with the second main body portion 21B. The second adjacent member 2B has at least one second restriction portion 23B that restricts movement of the energy storage device 10 adjacent to the second main body portion 21B with respect to the second main body portion 21B, and a second fixing portion 24B used for fixing the second adjacent member 2B to the holding portion 3.

The second main body portion 21B is a portion facing the long wall portion 123 of the case 11 of the energy storage device 10 in a state of being partially in contact therewith. This second main body portion 21B forms, in cooperation with the adjacent energy storage device 10, a flow path R between the second main body portion 21B and the energy storage device 10, through which a fluid for temperature adjustment can circulate. A dimension in the X-axis direction of the second main body portion 21B of the present embodiment is larger than a dimension in the X-axis direction of the first main body portion 21A (i.e., it is thick-walled). The second main body portion 21B is in a rectangular plate shape having approximately the same size as the energy storage device 10 when viewed from the X-axis direction. This second main body portion 21B has a plurality of ribs 211B each extending in the Y-axis direction and arranged at an interval in the Z-axis direction. The plurality of ribs 211B protrude from a second facing surface 212B of the second main body portion 21B, which faces the energy storage device 10.

The two second engaging pieces 22B extend from positions at an interval in the Y-axis direction at an end on the one side of the Z-axis direction of the second main body portion 21B. Similar to the two first engaging pieces 22A of the first adjacent member 2A, the interval in the Y-axis direction between these two second engaging pieces 22B is set according to the dimension in the Y-axis direction of the duct portion 4 and the dimension in the Y-axis direction of the seal portion Se. Each of these two second engaging pieces 22B has the same configuration as the first engaging piece 22A. That is, the second engaging piece 22B has an engaging piece main body 221B and an engaging portion 222B, and is in a plate shape with the Y-axis direction as a thickness direction. The second engaging piece 22B has an inner side surface 22Ba facing an inner side of the Y-axis direction, and an outer side surface (second restriction surface) 22Bb facing an opposite side to the inner side surface 22Ba.

The second restriction portion 23B extends in the X-axis direction from at least a corner portion of the rectangular second main body portion 21B. This second restriction portion 23B restricts relative movement of the energy storage device 10 (specifically, the case 11) with respect to the second main body portion 21B in the surface direction by abutting against the energy storage device 10 adjacent to the second main body portion 21B from an outside in the surface direction orthogonal to the X-axis direction. The second restriction portion 23B of the present embodiment extends from the second main body portion 21B toward the one side and the other side of the X-axis direction.

The second fixing portion 24B is disposed at each end in the Y-axis direction in the second main body portion 21B. These second fixing portions 24B fix the second adjacent member 2B and the holding portion 3 by engaging with the first fixing portion B1. The second fixing portion 24B of the present embodiment is an insert nut. The first fixing portion B1 of the present embodiment is a bolt and fastens the second adjacent member 2B and the holding portion 3 by engaging (threading, etc.) with the second fixing portion 24B in a state of being inserted through the holding portion 3.

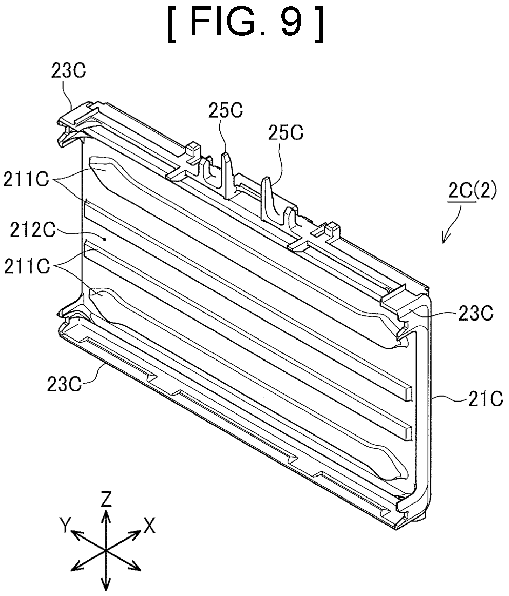

As also illustrated in FIG. 9, the two third adjacent members 2C have a third main body portion 21C overlapping with the energy storage device 10 when viewed from the X-axis direction, at least one third restriction portion 23C that restricts movement of the energy storage device 10 adjacent to the third main body portion 21C with respect to the third main body portion 21C, and a pair of guide portions 25C extending from the third main body portion 21C in the Z-axis direction.

The third main body portion 21C is a portion facing the long wall portion 123 of the energy storage device 10 in a state of being partially in contact with a part thereof. Similar to the first main body portion 21A of the first adjacent member 2A and the second main body portion 21B of the second adjacent member 2B, this third main body portion 21C also forms, in cooperation with the adjacent energy storage device 10, a flow path R between the third main body portion 21C and the energy storage device 10, through which a fluid for temperature adjustment can circulate. The third main body portion 21C of the present embodiment is in a rectangular plate shape having approximately the same size as the energy storage device 10 when viewed from the X-axis direction. This third main body portion 21C has a plurality of ribs 211C each extending in the Y-axis direction and arranged at an interval in the Z-axis direction. The plurality of ribs 211C protrude from a third facing surface 212C of the third main body portion 21C, which faces the energy storage device 10.

The third restriction portion 23C extends in the X-axis direction from at least a corner portion of the rectangular third main body portion 21C. This third restriction portion 23 restricts relative movement of the energy storage device 10 (specifically, the case 11) with respect to the third main body portion 21C in the surface direction by abutting against the energy storage device 10 adjacent to the third main body portion 21C from an outside in the surface direction orthogonal to the X-axis direction. The third restriction portion 23C of the present embodiment extends from the third main body portion 21C in a direction toward the energy storage device 10 in the X-axis direction.

The pair of guide portions 25C guide the duct portion 4 to an attachment position when the duct portion 4 is attached to the apparatus main body A. Specifically, the pair of guide portions 25C are disposed at an interval set according to the dimension of the duct portion 4 in the Y-axis direction. Each guide portion 25C extends from the third main body portion 21C toward the one side of the Z-axis direction along the duct portion 4.

As illustrated in FIGS. 1 to 6, the holding portion 3 holds the stack D by surrounding a periphery of the stack D. That is, the holding portion 3 holds the plurality of energy storage devices 10 and the plurality of adjacent members 2 collectively by surrounding the periphery of the plurality of energy storage devices 10 and the plurality of adjacent members 2. This holding portion 3 is configured by metal, resin, or the like.

The holding portion 3 includes a pair of end portions 31 disposed on both sides of the stack D in the X-axis direction, an extending portion 32 extending in the X-axis direction along the stack D at a position arranged with the stack D in the Y-axis direction, and a connection portion 33 connecting the end portion 31 and the extending portion 32. The holding portion 3 of the present embodiment has a pair of extending portions 32. The stack D is disposed between the pair of extending portions 32 in the Y-axis direction.

The pair of end portions 31 sandwich third adjacent members 2C with energy storage devices 10 disposed at ends in the X-axis direction. Specifically, the pair of end portions 31 include an end portion main body 311 extending along a surface direction orthogonal to the X-axis direction, and a flange portion 313 extending from the end portion main body 311 in a direction away from the energy storage device 10 in the X-axis direction (see FIG. 6).

The end portion main body 311 has a rectangular shape with approximately the same size as the energy storage device 10 when viewed from the X-axis direction. The end portion main body 311 has a rectangular shape long in the Y-axis direction and has a plurality of through holes 312 disposed at an interval in the Z-axis direction at both ends in the Y-axis direction (see FIG. 6). The flange portion 313 extends from an end on the one side of the Z-axis direction of the end portion main body 311 in the X-axis direction and extends in the Y-axis direction.

The pair of extending portions 32 include an extending portion main body 320 facing the short wall portion 124 of each energy storage device 10 via an insulator I, a first piece portion 321 extending in the Y-axis direction and the X-axis direction from an end on the one side of the Z-axis direction of the extending portion main body 320 along the cover plate 13 of each energy storage device 10, a second piece portion 322 extending in the Y-axis direction and the X-axis direction from an end on the other side of the Z-axis direction of the extending portion main body 320 along the closing portion 121 of each energy storage device 10, and a pair of third piece portions 323 extending in the Y-axis direction and the Z-axis direction from each end in the X-axis direction of the extending portion main body 320 along the end portion 31 (see FIG. 6).

The extending portion main body 320 is a plate-shaped portion extending along the short wall portion 124 of each energy storage device 10 and has a plurality of vent holes 3201 penetrating in the Y-axis direction so that a fluid for temperature adjustment can flow into or out of each flow path R, and a plurality of first fixing holes 3202 penetrating in the Y-axis direction at positions facing each second fixing portion 24B of the second adjacent member 2B. The first fixing portion B1 is inserted through this first fixing hole 3202.

The first piece portion 321 is a strip-shaped portion which is long in the X-axis direction. The second piece portion 322 is strip-shaped and long in the X-axis direction. A width (dimension in the Y-axis direction) of a portion of this second piece portion 322 excluding both ends in the X-axis direction is larger than a width of the first piece portion 321. The pair of third piece portions 323 have a plurality of second fixing holes 3231 disposed at an interval in the Z-axis direction. Each second fixing hole 3231 is disposed at a position facing the through hole 312 of the end portion 31.

The plurality of connection portions 33 fasten the end portion 31 and the extending portion 32 in a state of being inserted through the through hole 312 of the end portion 31 and the second fixing hole 3231 of the extending portion 32 (specifically, the third piece portion 323). Each connection portion 33 of the present embodiment is configured by a bolt 331 and a nut 332.

The insulator I has insulating properties. This insulator I is disposed between the extending portion 32 and the stack D. Specifically, the energy storage apparatus 1 includes a pair of insulators I, and each insulator I covers a region facing at least the plurality of energy storage devices 10 in the extending portion 32. Thereby, each insulator I electrically insulates between the extending portion 32 and the plurality of energy storage devices 10. Each insulator I has, at a position facing each vent hole 3201 of the extending portion main body 320 (see FIG. 6), a ventilation area Ia in approximately the same size as and a similar shape to each vent hole 3201 of the extending portion main body 320.

The seal portion Se is a portion or member disposed between the apparatus main body A and the duct portion 4 to suppress gas leakage from between the apparatus main body A and the duct portion 4. The seal portion Se has at least one communication hole Se1 communicating between the gas release valve 132 and a guide space S1 (see FIG. 3). This seal portion Se extends in the X-axis direction at a position facing the gas release valve 132 in the Y-axis direction at the end on the one side of the Z-axis direction of the apparatus main body A. The seal portion Se of the present embodiment is formed of a foam such as a fluorine-based, silicon-based, or urethane-based resin and seals between the apparatus main body A and the duct portion 4.

Specifically, the seal portion Se is a strip-shaped member with the Y-axis direction as a short-side direction and the X-axis direction as a longitudinal direction. This seal portion Se has a communication hole Se1 at a position facing the gas release valve 132 of each energy storage device 10 (specifically, a position overlapping each gas release valve 132 when viewed from the Z-axis direction).

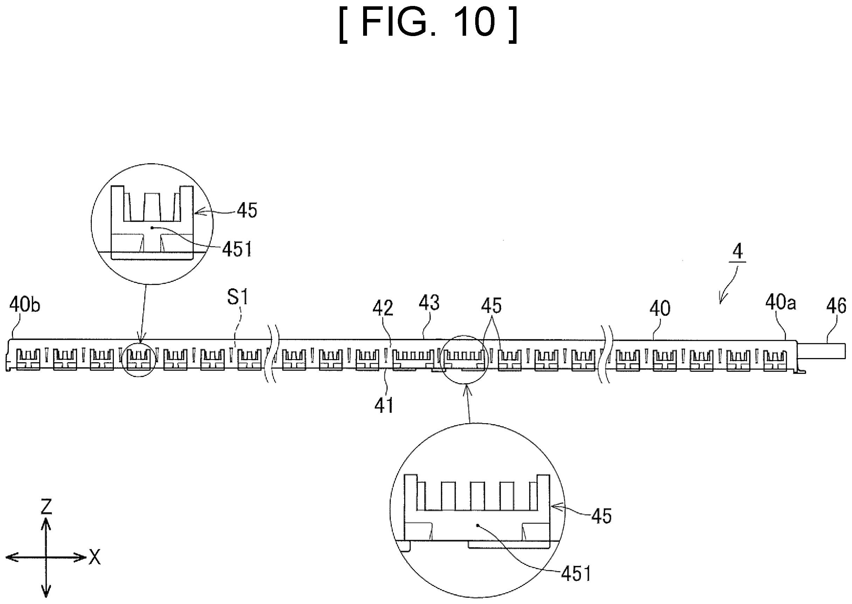

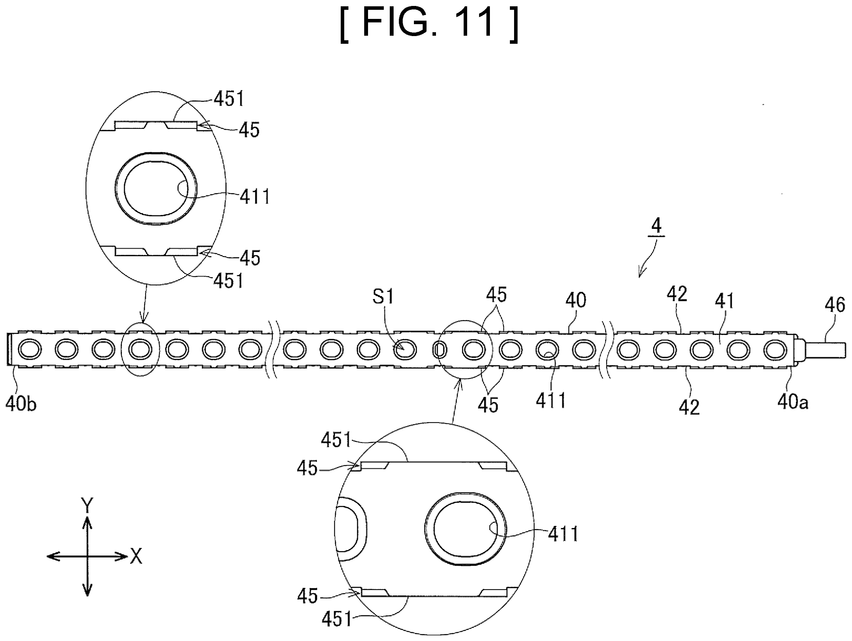

The duct portion 4 is overlapped on the stack D from the one side of the Z-axis direction at a position facing each gas release valve 132. The duct portion 4 of the present embodiment extends along each energy storage device 10 of the stack D from the energy storage device 10 at an end on one side in the X-axis direction to the energy storage device 10 at an end on an other side. As also illustrated in FIGS. 10 and 11, this duct portion 4 includes a side wall portion (wall portion) 42 extending along a surface direction orthogonal to the Y-axis direction, and an engaged portion (engaged convex portion) 45 protruding from the side wall portion 42 toward an outside of the Y-axis direction (a direction toward a housing portion 71 to be described later).

Specifically, the duct portion 4 includes: a duct portion main body 40 extending in the X-axis direction and guiding gas discharged from the gas release valve 132 of the energy storage device 10, in the X-axis direction; and a joint portion 46 disposed at an end 40a on one side (right side in FIG. 9) of the duct portion main body 40 in the X-axis direction. The duct portion 4 has a plurality of engaged portions (engaged convex portions) 45 engaging with the engaging pieces 22A and 22B of the adjacent members 2A and 2B (specifically, engaging portions 222A and 222B of the engaging pieces 22A and 22B: see FIGS. 7 and 8). The duct portion 4 of the present embodiment is made of a resin such as polybutylene terephthalate or glass fiber reinforced resin (polybutylene terephthalate-glass fiber).

The duct portion main body 40 is a hollow cylindrical portion extending in the X-axis direction and having a guide space S1 inside. The duct portion main body 40 of the present embodiment extends from the end on the one side (right side in FIG. 2) of the apparatus main body A in the X-axis direction to the end on the other side (left side in FIG. 2) and an end 40b on an other side (left side in FIG. 9) is closed. This duct portion main body 40 is disposed at a position overlapping the gas release valve 132 of each energy storage device 10 when viewed from the Z-axis direction.

Specifically, the duct portion main body 40 includes a bottom wall portion 41 facing the apparatus main body A (the plurality of energy storage devices 10), a pair of side wall portions 42 extending from both ends in the Y-axis direction of the bottom wall portion 41 toward the one side of the Z-axis direction, and a top wall portion 43 connecting ends on the one side of the Z-axis direction of the pair of side wall portions 42 to each other. In the duct portion main body 40, a space surrounded by these bottom wall portion 41, the pair of side wall portions 42, and the top wall portion 43 constitutes a guide space S1 capable of guiding gas discharged from the gas release valve 132 to the joint portion 46.

The bottom wall portion 41 is a strip-shaped portion having the Y-axis direction as a short-side direction and the X-axis direction as a longitudinal direction. This bottom wall portion 41 is a portion for sandwiching the seal portion Se between the bottom wall portion 41 and the apparatus main body A in the duct portion main body 40. The bottom wall portion 41 has a communication hole 411 communicating between the communication hole Se1 and the guide space S1 at a position facing each communication hole Se1 of the seal portion Se (in other words, a position facing the gas release valve 132 of each energy storage device 10).

The plurality of engaged portions 45 are portions with which the engaging pieces 22A and 22B of each adjacent member 2A and 2B engage (hook, in the example of the present embodiment) in order to fix the duct portion 4 to the adjacent member 2A and 2B (i.e., the apparatus main body A). Each engaged portion 45 protrudes from the side wall portion 42 toward the outside of the Y-axis direction. A tip surface (first restriction surface) 451 in a protruding direction of this engaged portion 45 extends in a surface direction orthogonal to the Y-axis direction. A protrusion amount (dimension in the Y-axis direction) of each engaged portion 45 is set according to a thickness of the engaging piece 22A and 22B of the adjacent member 2A and 2B. Specifically, when each engaging piece 22A and 22B engages with the engaged portion 45, a position in the Y-axis direction of the outer side surface 22Ab and 22Bb of each engaging piece 22A and 22B becomes the same as a position in the Y-axis direction of the tip surface 451 of the engaged portion 45. These engaged portions 45 are disposed at an interval in the X-axis direction in the side wall portion 42.

The joint portion 46 can release gas guided to one end 40a of the duct portion main body 40 to an other member connected thereto. This joint portion 46 is a portion extending in the X-axis direction from the one end 40a of the duct portion main body 40. The joint portion 46 of the present embodiment has a cylindrical shape communicating between the guide space S1 and an external space.

In the duct portion 4 configured as above, in a state where the duct portion 4 is attached to the apparatus main body A in a state of sandwiching the seal portion Se with the apparatus main body A, as also illustrated in FIG. 12, the engaging piece main bodies 221A and 221B of the adjacent members 2A and 2B are located between the engaged portions 45 adjacent at an interval in the X-axis direction, and each engaging portion 222A and 222B extending from the engaging piece main body 221A and 221B abuts (engages) from the one side of the Z-axis direction against the engaged portion 45 adjacent in the X-axis direction to the engaging piece main body 221A and 221B. Thereby, the duct portion 4 is engaged with the apparatus main body A (each adjacent member 2A and 2B).

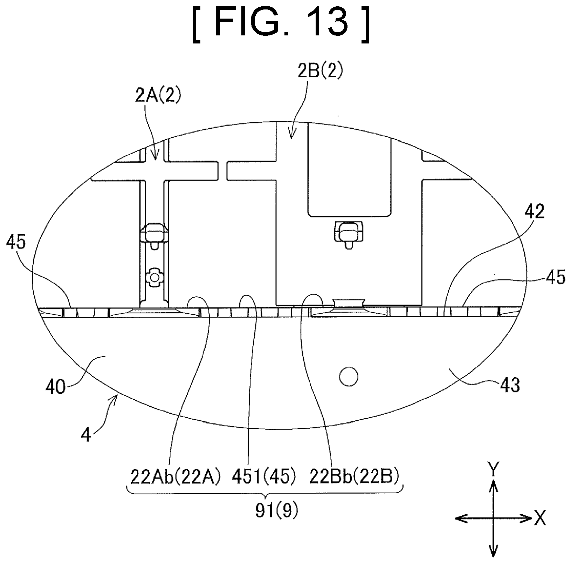

At this time, the outer side surfaces 22Ab and 22Bb of the engaging pieces 22A and 22B and the tip surfaces 451 of the engaged portions 45 constitute a surface when viewed from the Z-axis direction (see FIG. 13). Among these outer side surfaces 22Ab and 22Bb and the tip surfaces 451, the outer side surfaces 22Ab and 22Bb and the tip surfaces 451 adjacent to the temperature detection portion 6 in the Y-axis direction constitute a restriction surface 91 (restriction portion 9) that restricts movement of the temperature detection portion 6 toward an inner side of the Y-axis direction (see FIGS. 12 and 13). When the temperature detection portion 6 attempts to move toward the inner side of the Y-axis direction, this restriction surface 91 prevents movement of the temperature detection portion 6 toward the inner side of the Y-axis direction (the direction of the duct portion 4) by the temperature detection portion 6 abutting against the restriction surface 91. The restriction surface 91 prevents further movement of the temperature detection portion 6 toward the inner side of the Y-axis direction (the direction toward the duct portion 4 in the Y-axis direction) by the temperature detection portion 6 abutting against the restriction surface 91 through movement. As to the restriction surface 91, it is preferable that the outer side surfaces 22Ab and 22Bb of the engaging pieces 22A and 22B and the tip surfaces 451 of the engaged portions 45 constitute a flat surface when viewed from the Z-axis direction, and it is more preferable that they constitute a flat surface without a step (are flush).

Returning to FIGS. 1 to 3, the plate portion B includes a plurality of busbars 5, at least one temperature detection portion 6 capable of detecting a temperature of the energy storage devices 10 from the one side of the Z-axis direction, a busbar holding member 7 holding the plurality of busbars 5, and a harness 8 having a plurality of wires 80 connected to the busbar 5 or the temperature detection portion 6. The plate portion B of the present embodiment includes a plurality of temperature detection portions 6. In FIG. 3, some of the plurality of busbars 5 disposed in the busbar holding member 7 are illustrated outside the busbar holding member 7 in order to explain a configuration.

The plurality of busbars 5 are plate-shaped members having conductivity such as metal and connect terminals 14 of different energy storage devices 10 to each other. These busbars 5 make the terminals 14 conductive to each other by connecting the terminals 14 of adjacent energy storage devices 10 to each other. Each busbar 5 of the present embodiment is welded to the terminal 14.

Specifically, the busbar 5 includes a busbar main body 51 that makes the terminals 14 conductive to each other, and a wire connection portion 52 to which the wire 80 is connected (see FIG. 3). The busbar main body 51 has a rectangular plate shape, and the wire connection portion 52 extends from a periphery of the busbar main body 51. These busbar main body 51 and the wire connection portion 52 are integrally formed.

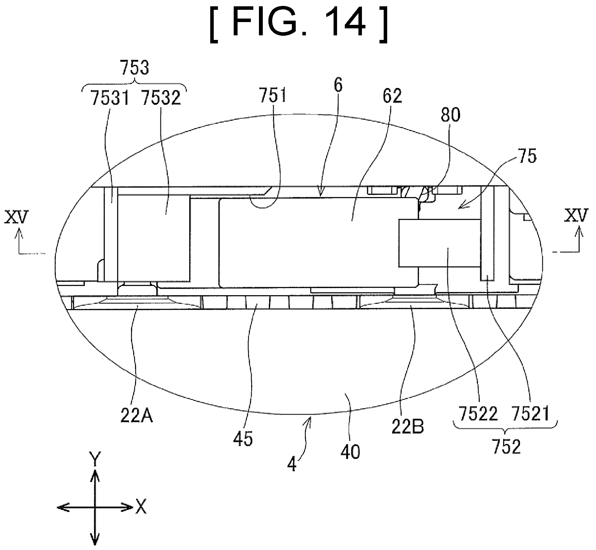

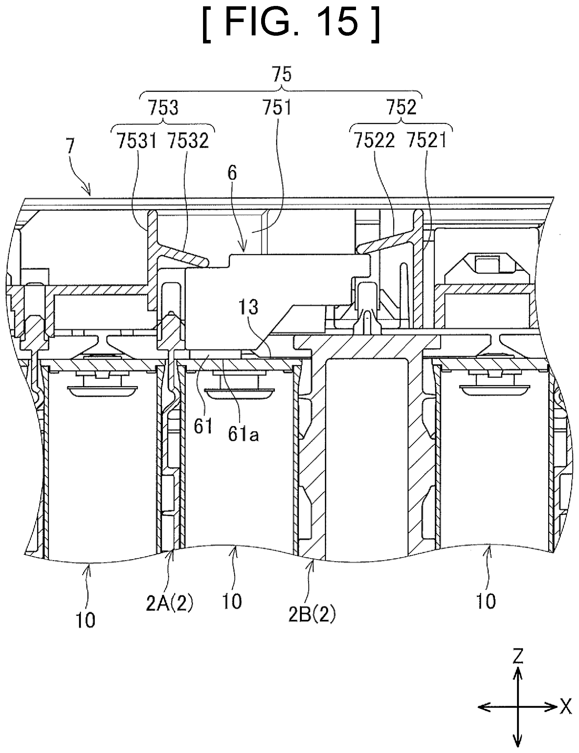

The temperature detection portion 6 outputs a signal according to a temperature of a surface of the energy storage device 10 by being in contact with or close to the surface (case 11) of the energy storage device 10. The temperature detection portion 6 of the present embodiment detects a temperature or the like of the surface of the energy storage device 10 by being in contact with the surface. Specifically, as illustrated in FIGS. 14 and 15, the temperature detection portion 6 includes a sensor portion 61 and a sensor holding portion 62 holding the sensor portion 61.

The sensor portion 61 has a contact surface 61a and detects a temperature or a temperature change of a target object (in the example of the present embodiment, the energy storage device 10, or specifically the cover plate 13 of the case 11) by bringing the contact surface 61a into contact with the target object. In the sensor portion 61 of the present embodiment, a thermistor detects the temperature or the like.

The sensor holding portion 62 holds the sensor portion 61 such that the contact surface 61a is exposed with the contact surface 61a facing the other side of the Z-axis direction.

Returning to FIGS. 1 to 3, the harness 8 includes a cable portion 81 having a plurality of wires 80 (see FIG. 2) and a connector 82 disposed at an end of the cable portion 81. An end on one side of each wire 80 included in the cable portion 81 is connected to the busbar 5 (specifically, the wire connection portion 52) or the temperature detection portion 6 (specifically, the sensor portion 61) or the like, and an end on an other side of each wire 80 is connected to the connector 82.

The cable portion 81 is formed by bundling at least a part of the plurality of wires 80 having ends on one side connected to the busbar 5 or the temperature detection portion 6 or the like. The cable portion 81 is disposed on the busbar holding member 7 with an end protruding from the busbar holding member 7 toward the other side of the X-axis direction. A connector 82 is attached to a tip in a protruding direction of this cable portion 81. The connector 82 of the present embodiment is a multi-pin connector.

The busbar holding member 7 is configured by a material having insulating properties such as resin. The busbar holding member 7 is a plate-shaped portion or member covering a surface where the terminals 14 are arranged in the apparatus main body A. This busbar holding member 7 is a plate-shaped member whose dimension in the Z-axis direction is smaller than the dimension in the X-axis direction and the dimension in the Y-axis direction, and has a rectangular shape with approximately the same size as the apparatus main body A when viewed from the Z-axis direction. The busbar holding member 7 is attached to the apparatus main body A by engaging or the like with each adjacent member 2A and 2B.

Specifically, the busbar holding member 7 includes a pair of strip-shaped plate portions 70 each extending along a row of terminals 14 arranged in the X-axis direction at the end on the one side of the Z-axis direction of the apparatus main body A, and a plurality of connection portions 76 connecting the strip-shaped plate portions 70 to each other.

The pair of strip-shaped plate portions 70 are disposed at an interval in the Y-axis direction such that a region (duct placement region) Ar1 where the duct portion 4 is disposed is formed therebetween. This duct placement region Ar1 extends from one end to an other end in the X-axis direction of the busbar holding member 7 at a central portion in the Y-axis direction of the busbar holding member 7.

The plurality of connection portions 76 are disposed at an interval in the X-axis direction, and each connection portion 76 extends in the Y-axis direction and both ends are connected to each strip-shaped plate portion 70.

Each strip-shaped plate portion 70 has a housing portion 71 having a busbar housing portion 72 housing the busbar 5 and a wire housing portion 73 housing the wire 80 constituting the cable portion 81, a lid portion 74 that blocks an opening on the one side of the Z-axis direction in the housing portion 71 so as to be capable of opening and closing, and a sensor placement portion 75 where the temperature detection portion 6 is disposed.

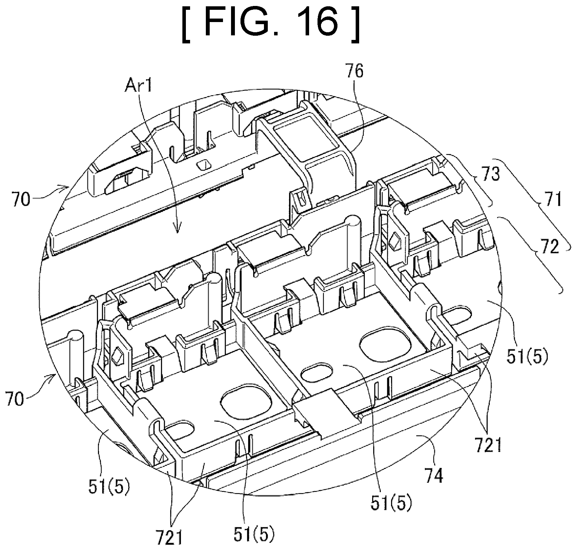

As also illustrated in FIGS. 15 and 16, the busbar housing portion 72 has a plurality of holding compartments 721 that hold the busbar 5 in a state of surrounding a periphery of the busbar 5. The plurality of holding compartments 721 are arranged in the X-axis direction.

Each holding compartment 721 has a rectangular cylindrical shape surrounding the busbar main body 51 along a periphery of the busbar main body 51. In the holding compartment 721, an end on the one side and an end on the other side of the Z-axis direction are open. The busbar 5 held in this holding compartment 721 is connected (welded, in the example of the present embodiment) to the terminals 14 of adjacent energy storage devices 10 respectively.

The wire housing portion 73 is a groove-shaped portion extending in the X-axis direction at a position adjacent to an inner side in the Y-axis direction of the busbar housing portion 72, and an end on the one side of the Z-axis direction is open. This wire housing portion 73 houses the wire 80 connected to each busbar 5, the wire 80 connected to the temperature detection portion 6, and the like on an inner side (inside a groove).

The lid portion 74 is a plate-shaped portion connected to an outer side end in the Y-axis direction of the busbar housing portion 72. This lid portion 74 blocks an opening of an end on the one side of the Z-axis direction in each holding compartment 721 and the wire housing portion 73 so as to be capable of opening and closing.

The sensor placement portion 75 is disposed at a position adjacent to an inner side in the Y-axis direction with respect to the housing portion 71 (i.e., an inner side in the Y-axis direction of the wire housing portion 73) and holds the temperature detection portion 6. A plurality of these sensor placement portions 75 are provided. The plurality of sensor placement portions 75 are disposed at an interval in the X-axis direction.

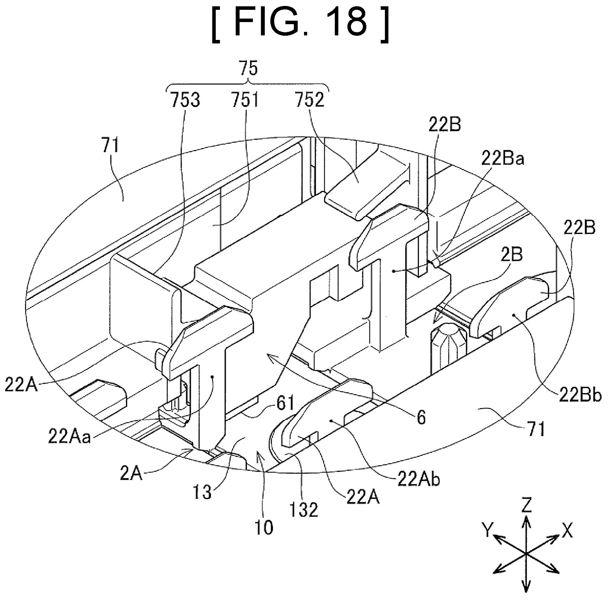

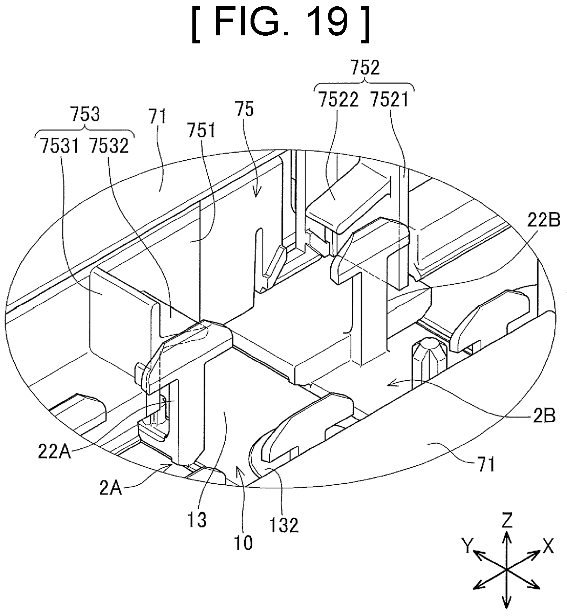

As illustrated in FIGS. 18 and 19, each sensor placement portion 75 has three portions 751, 752, and 753 that restrict movement of the temperature detection portion 6 in three directions. Specifically, the sensor placement portion 75 has a first portion 751 that restricts movement of the temperature detection portion 6 toward an outer side of the Y-axis direction (a direction toward the housing portion 71 in the Y-axis direction), a second portion 752 that restricts movement of the temperature detection portion 6 toward one side of the X-axis direction, and a third portion 753 that restricts movement of the temperature detection portion 6 toward the other side of the X-axis direction.

The first portion 751 is a wall-shaped portion extending along a surface direction orthogonal to the Y-axis direction and prevents movement of the temperature detection portion 6 toward the outer side of the Y-axis direction by the temperature detection portion 6 abutting against the first portion 751 when the temperature detection portion 6 attempts to move toward the outer side of the Y-axis direction. The first portion 751 prevents further movement of the temperature detection portion 6 toward the outer side of the Y-axis direction by the temperature detection portion 6 moving and abutting against the first portion 751. The first portion 751 of the present embodiment also serves as a part of the wire housing portion 73 (a wall portion configuring the wire housing portion 73).

As also illustrated in FIG. 15, the second portion 752 includes a second base portion 7521 extending from the housing portion 71 toward the inner side of the Y-axis direction, and a hook portion 7522 extending from the second base portion 7521 toward the other side of the X-axis direction. The second portion 752 may have a configuration having an abutting piece that extends downward from the hook portion 7522 and abuts against the one side of the X-axis direction of the temperature detection portion 6 in order to prevent movement of the temperature detection portion 6 toward the one side of the X-axis direction.

The third portion 753 includes a third base portion 7531 extending from the housing portion 71 toward the inner side of the Y-axis direction, and an extension portion 7532 extending from the third base portion 7531 toward the one side of the X-axis direction (see FIG. 15). The third portion 753 prevents further movement of the temperature detection portion 6 toward the other side of the X-axis direction by the temperature detection portion 6 moving toward the other side of the X-axis direction and abutting against the third base portion 7531. The extension portion 7532 sandwiches the temperature detection portion 6 between itself and the energy storage device 10 (cover plate 13) in the Z-axis direction. Thereby, the contact surface 61a of the sensor portion 61 of the temperature detection portion 6 is pressed against the cover plate 13 of the energy storage device 10 with sufficient force.

In the sensor placement portion 75 described above, an inner side in the Y-axis direction is open without a wall or the like. In a state where the temperature detection portion 6 is disposed, the sensor placement portion 75 alone cannot restrict movement of the temperature detection portion 6 toward the inner side of the Y-axis direction. However, in the energy storage apparatus 1 of the present embodiment, when the temperature detection portion 6 is disposed in the sensor placement portion 75, the temperature detection portion 6 is arranged in the Y-axis direction so as to be located between the housing portion 71 and the duct portion 4. A part of this duct portion 4 (in the example of the present embodiment, the engaged portion 45 or the like facing the temperature detection portion 6 in the Y-axis direction) restricts movement of the temperature detection portion 6 toward the inner side of the Y-axis direction. That is, in the energy storage apparatus 1 of the present embodiment, a restriction portion 9 that restricts movement toward the inner side of the Y-axis direction of the temperature detection portion 6 disposed in the sensor placement portion 75 is configured by at least the aforementioned part of the duct portion 4. At a position where the engaging pieces 22A and 22B are disposed, the duct portion 4 is disposed at a position adjacent to the engaging pieces 22A and 22B such that the engaging pieces 22A and 22B are located between the housing portion 71 and the duct portion 4 in the Y-axis direction.

In a part where the sensor placement portion 75 of the energy storage apparatus 1 exists, the engaging pieces 22A and 22B of each adjacent member 2A and 2B are disposed between the temperature detection portion 6 and the duct portion 4 in the Y-axis direction. The restriction portion 9 includes the engaging pieces 22A and 22B at a position facing the sensor placement portion 75 (that is, the engaging pieces 22A and 22B at a position facing the temperature detection portion 6 in the Y-axis direction). In other words, the housing portion 71, the engaging pieces 22A and 22B, and the temperature detection portion 6 are arranged in the Y-axis direction such that the temperature detection portion 6 is located between the housing portion 71 and the engaging pieces 22A and 22B. Then, the restriction portion 9 is configured by at least the engaging pieces 22A and 22B.

The energy storage apparatus 1 of the present embodiment configured as above includes the plurality of energy storage devices 10 each having the terminal 14 and the gas release valve 132 disposed at an interval in the Y-axis direction (second direction) at the end on the one side of the Z-axis direction (first direction), the plurality of energy storage devices 10 being arranged in the X-axis direction (third direction), the duct portion 4 overlapping the gas release valve 132 from the one side of the Z-axis direction and extending along the X-axis direction, the busbar holding member 7 having the housing portion 71 that houses the busbars 5 connecting the terminals 14 of the energy storage devices 10 to each other and overlapped on the plurality of energy storage devices 10 from the one side of the Z-axis direction, and the temperature detection portion 6 capable of detecting a temperature of the energy storage devices 10 from the one side of the Z-axis direction. The housing portion 71 and the duct portion 4 are arranged in the Y-axis direction such that the temperature detection portion 6 is located therebetween (the temperature detection portion 6 is disposed between the housing portion 71 and the duct portion 4). The restriction portion 9 that restricts movement of the temperature detection portion 6 in a direction toward the duct portion side in the Y-axis direction is configured by at least a part of the duct portion 4 (in the example of the present embodiment, the engaged portion 45).

According to such a configuration, by utilizing a part of the duct portion 4 as the restriction portion 9, movement of the temperature detection portion 6 in the direction toward the duct portion side in the Y-axis direction can be restricted without separately providing the restriction portion 9. Thereby, a dimension of the duct portion 4 in the Y-axis direction (width direction) can be increased, and a dimension in the Y-axis direction (width direction) of a combination of the duct portion 4 and the busbar holding member 7 can be reduced.

The energy storage apparatus 1 of the present embodiment includes the adjacent members 2A and 2B having the main body portions (main bodies) 21A and 21B disposed between the energy storage devices 10 adjacent in the X-axis direction (third direction) and the engaging pieces (convex portions) 22A and 22B extending from the main body portions 21A and 21B toward the one side of the Z-axis direction (first direction). The engaging pieces 22A and 22B are disposed between the temperature detection portion 6 and the duct portion 4 in the Y-axis direction (second direction), and the restriction portion 9 includes the engaging pieces 22A and 22B. Therefore, movement of the temperature detection portion 6 in the direction toward the duct portion 4 side in the Y-axis direction is restricted not only by the duct portion 4 but also by the engaging pieces 22A and 22B of the adjacent members 2A and 2B.

The energy storage apparatus 1 of the present embodiment includes the plurality of energy storage devices 10 each having the terminal 14 disposed at the end on the one side of the Z-axis direction (first direction), the plurality of energy storage devices 10 being arranged in the X-axis direction (third direction), the adjacent members 2A and 2B having the main body portions (main bodies) 21A and 21B disposed between the energy storage devices 10 adjacent in the X-axis direction and the engaging pieces (convex portions) 22A and 22B extending from the main body portions 21A and 21B toward the one side of the Z-axis direction, the busbar holding member 7 provided with the housing portion 71 that houses the busbars 5 connecting the terminals 14 of the energy storage devices 10 to each other and overlapped on the plurality of energy storage devices 10 from the one side of the Z-axis direction, and the temperature detection portion 6 capable of detecting a temperature of the energy storage devices 10 from the one side of the Z-axis direction. The housing portion 71 and the engaging pieces 22A and 22B are arranged in the Y-axis direction (second direction) such that the temperature detection portion 6 is located therebetween, and the restriction portion 9 that restricts movement of the temperature detection portion 6 in a direction away from the housing portion 71 in the Y-axis direction is configured by at least the engaging pieces 22A and 22B.

According to such a configuration, by utilizing a part (in the example of the present embodiment, the engaging pieces 22A and 22B) of the adjacent members 2A and 2B as the restriction portion 9, movement of the temperature detection portion 6 toward an engaging pieces 22A and 22B side in the Y-axis direction can be restricted without separately providing the restriction portion 9. For this reason, a space for disposing an other member can be secured on an opposite side of the engaging pieces 22A and 22B from the housing portion 71 in the Y-axis direction, and a dimension in the Y-axis direction (width direction) of a combination of the engaging pieces 22A and 22B and the busbar holding member 7 can be reduced.

The energy storage apparatus 1 of the present embodiment includes the duct portion 4. The energy storage device 10 includes the gas release valve 132 disposed at the end on the one side of the Z-axis direction (first direction), at an interval from the terminal 14 toward an engaging pieces 22A and 22B side of the Y-axis direction (second direction). The duct portion 4 overlaps the gas release valve 132 from the one side of the Z-axis direction and extends along the X-axis direction (third direction), and is disposed at a position adjacent to the engaging pieces 22A and 22B such that the engaging pieces 22A and 22B are located between the housing portion 71 and the duct portion 4 in the Y-axis direction, and the restriction portion 9 includes a part of the duct portion 4 (in the example of the present embodiment, the engaged portion 45). Therefore, movement of the temperature detection portion 6 toward the engaging pieces 22A and 22B side in the Y-axis direction is restricted not only by the engaging pieces 22A and 22B of the adjacent members 2A and 2B but also by the duct portion 4.

In the energy storage apparatus 1 of the present embodiment, the duct portion 4 includes the side wall portion (wall portion) 42 extending along a direction orthogonal to the Y-axis direction (second direction), and the engaged portion (engaged convex portion) 45 protruding from the side wall portion 42 in a direction toward the housing portion 71 in the Y-axis direction (second direction). The engaging pieces 22A and 22B restrict movement of the duct portion 4 toward the one side of the Z-axis direction (first direction) with respect to the adjacent members 2A and 2B by engaging with the engaged portion 45.

According to such a configuration, by utilizing a portion (in the example of the present embodiment, the engaging pieces 22A and 22B) of the adjacent members 2A and 2B that restricts movement of the duct portion 4 toward the one side of the Z-axis direction with respect to the adjacent members 2A and 2B, movement of the temperature detection portion 6 in the direction toward the duct portion 4 side in the Y-axis direction can be restricted.

In the energy storage apparatus 1 of the present embodiment, the tip surface (first restriction surface) 451 of the engaged portion 45 facing an outer side of the Y-axis direction (a direction toward the housing portion 71) and the outer side surfaces (second restriction surfaces) 22Ab and 22Bb of the engaging pieces 22A and 22B facing the outer side of the Y-axis direction constitute the restriction surface 91 that restricts movement of the temperature detection portion 6 in the direction toward the duct portion 4 side in the Y-axis direction. By restricting movement of the temperature detection portion 6 with a surface (restriction surface) 91, it becomes easy to secure a contact area between the restriction surface 91 and the temperature detection portion 6. Accordingly, movement of the temperature detection portion 6 in the direction toward the duct portion 4 side in the Y-axis direction can be effectively restricted.

In the energy storage apparatus 1 of the present embodiment, the tip surface (first restriction surface) 451 of the engaged portion 45 and the outer side surfaces (second restriction surfaces) 22Ab and 22Bb of the engaging pieces 22A and 22B are flush. For this reason, it is even more easy to secure the contact area between the temperature detection portion 6 and the restriction surface 91. Accordingly, movement of the temperature detection portion 6 in the direction toward the duct portion 4 side in the Y-axis direction can be even more effectively restricted.

The energy storage apparatus 1 of the present invention is not limited to the above embodiment, and it is a matter of course that various changes can be made within a scope not departing from a gist of the present invention. For example, a configuration of a certain embodiment can be added to a configuration of an other embodiment. A part of a configuration of a certain embodiment can be replaced with a configuration of an other embodiment. A part of a configuration of a certain embodiment can be deleted.

In the energy storage apparatus 1 of the above embodiment, the busbar holding member 7 (the sensor placement portion 75 in the above embodiment) restricts movement of two directions (the outer side of the Y-axis direction and the other side of the X-axis direction) of the temperature detection portion 6, but this configuration is not a limitation. It is sufficient if the busbar holding member 7 can restrict at least movement of the temperature detection portion 6 toward the outer side of the Y-axis direction (a direction toward the housing portion 71, an opposite side to the duct portion 4). In this case, movement in a direction where movement of the temperature detection portion 6 is not restricted by the busbar holding member 7 and the duct portion 4 is restricted by a member or portion other than the busbar holding member 7 and the duct portion 4. The second portion 752 of the busbar holding member 7 may restrict movement of the temperature detection portion 6 to the one side of the X-axis direction by having the above-mentioned abutting piece.

In the energy storage apparatus 1 of the above embodiment, the restriction portion 9 that restricts movement of the temperature detection portion 6 toward the inner side of the Y-axis direction (the direction toward the duct portion 4) is configured by the engaged portion (engaged convex portion) 45 of the duct portion 4 and the engaging piece (convex portion) 22A and 22B of the adjacent members 2A and 2B, but this configuration is not a limitation. The restriction portion 9 may be configured by only the engaged portion 45 of the duct portion 4, or may be configured by only the engaging piece 22A and 22B of the adjacent members 2A and 2B. The restriction portion 9 may include an other member or portion in addition to the engaged portion 45 and the engaging piece 22A and 22B.

A portion of the duct portion 4 configuring all or a part of the restriction portion 9 may be a portion other than the engaged portion 45. A portion of the adjacent members 2A and 2B configuring all or a part of the restriction portion 9 is not limited to the portions (engaging pieces) 22A and 22B for engaging the duct portion 4 with the adjacent members 2A and 2B. The portion of the adjacent members 2A and 2B configuring all or a part of the restriction portion 9 may be a portion (convex portion) extending from the main body portion 21A and 21B toward the one side of the Z-axis direction. A specific configuration of the convex portion included in the restriction portion 9 is not limited.

In the energy storage apparatus 1 of the above embodiment, the first restriction surface (tip surface of the engaged portion 45) 451 and the second restriction surfaces (outer side surface of the engaging pieces 22A and 22B) 22Ab and 22Bb configuring the restriction surface 91 are flush, but this configuration is not a limitation. The first restriction surface 451 and the second restriction surfaces 22Ab and 22Bb do not have to be flush and may be shifted in the Y-axis direction.

In the energy storage apparatus 1 of the above embodiment, the restriction surface 91 that restricts movement of the temperature detection portion 6 toward the inner side of the Y-axis direction is a surface orthogonal to the Y-axis direction, but this configuration is not a limitation. The restriction surface 91 may include a curved portion, a bent portion, or the like. The restriction surface 91 may have a configuration that restricts movement toward the inner side of the Y-axis direction not by surface contact with the temperature detection portion 6 but by line contact, point contact, or the like.

In the energy storage apparatus 1 of the above embodiment, a plurality of temperature detection portions 6 are disposed in the plate portion B, but this configuration is not a limitation, and only one temperature detection portion 6 may be disposed.

In the energy storage apparatus 1 of the above embodiment, the temperature detection portion 6 is disposed such that the sensor portion 61 is in contact with the surface of the energy storage device 10, but this configuration is not a limitation. The temperature detection portion 6 may be disposed in a state where there is a gap between the sensor portion 61 and the surface of the energy storage device 10, and in this state, the temperature detection portion 6 may detect the temperature of the energy storage devices 10 without contact.

In the above embodiment, a case where the energy storage device is used as a non-aqueous electrolyte secondary battery (for example, a lithium ion secondary battery) capable of charging and discharging has been described, but a type and size (capacity) of the energy storage device are optional. In the above embodiment, a lithium ion secondary battery has been described as an example of the energy storage device, but it is not limited to this. The present invention is also applicable to various secondary batteries, and besides, primary batteries, and energy storage devices such as electric double layer capacitors.

To represent the present invention, the present invention has been appropriately and sufficiently explained through the embodiment with reference to the drawings in the above, but it should be recognized that a person skilled in the art can easily make changes and/or improvements to the above-mentioned embodiment. Accordingly, as long as a change form or an improvement form implemented by the person skilled in the art is not at a level departing from a scope of rights of claims described in the scope of claims, the change form or the improvement form is interpreted as being included in the scope of rights of the claims.

### DESCRIPTION OF REFERENCE NUMERALS

1 Energy storage apparatus
2 Adjacent member
2A First adjacent member (adjacent member)
21A First main body portion (main body)
22A First engaging piece (convex portion)
22Aa Inner side surface
22Ab Outer side surface (second restriction surface)
221A Engaging piece main body
222A Engaging portion
23A First restriction portion
2B Second adjacent member (adjacent member)
21B Second main body portion (main body)
211B Rib
212B Second facing surface
22B Second engaging piece (convex portion)
22Ba Inner side surface
22Bb Outer side surface (second restriction surface)
221B Engaging piece main body
222B Engaging portion
23B Second restriction portion
24B Second fixing portion
2C Third adjacent member
21C Third main body portion
211C Rib
212C Third facing surface
23C Third restriction portion
25C Guide portion
3 Holding portion
31 End portion
311 End portion main body
312 Through hole
313 Flange portion
32 Extending portion
320 Extending portion main body
3201 Vent hole
3202 First fixing hole
321 First piece portion
322 Second piece portion
323 Third piece portion
3231 Second fixing hole
33 Connection portion
331 Bolt
332 Nut
4 Duct portion
40 Duct portion main body
40a One end
40b Other end
41 Bottom wall portion
411 Communication hole
42 Side wall portion (wall portion)
43 Top wall portion
45 Engaged portion (engaged convex portion)
451 Tip surface (first restriction surface)
46 Joint portion
5 Busbar
51 Busbar main body
52 Wire connection portion
6 Temperature detection portion
61 Sensor portion
61a Contact surface
62 Sensor holding portion
7 Busbar holding member
70 Strip-shaped plate portion
71 Housing portion
72 Busbar housing portion
721 Holding compartment
73 Wire housing portion
74 Lid portion
75 Sensor placement portion
751 First portion
752 Second portion
7521 Second base portion
7522 Hook portion
753 Third portion
7531 Third base portion
7532 Extension portion
76 Connection portion
8 Harness
80 Wire
81 Cable portion
82 Connector
9 Restriction portion
91 Restriction surface
10 Energy storage device
11 Case
12 Case main body
121 Closing portion
122 Body portion
123 Long wall portion
124 Short wall portion
13 Cover plate
131 Cover plate main body
132 Gas release valve
500 Assembled battery
510 Battery stack
511 Battery cell
512 Outer case
513a Positive electrode terminal
513b Negative electrode terminal
520 Busbar module
521 Smoke exhaust duct
522 Busbar case
523 Thermistor
524 Attachment portion
524a Wall portion
524b Wall portion
524c Wall portion
524d Wall portion
525 Battery monitoring board
A Apparatus main body
Ar1 Duct placement region
B Plate portion
B1 First fixing portion
D Stack
I Insulator
Ia Ventilation area
R Flow path
S1 Guide space
Se Seal portion
Se1 Communication hole

## Claims

1. An energy storage apparatus comprising:
a plurality of energy storage devices including terminals and gas release valves disposed at an interval in a second direction orthogonal to a first direction at an end on one side of the first direction, the plurality of energy storage devices being arranged in a third direction orthogonal to each of the first direction and the second direction;
a duct portion overlapping the gas release valves from the one side of the first direction and extending along the third direction;
a busbar holding member having a housing portion that houses busbars connecting the terminals of the energy storage devices to each other, the busbar holding member being overlapped on the plurality of energy storage devices from the one side of the first direction; and
a temperature detection portion capable of detecting a temperature of the energy storage devices from the one side of the first direction,
wherein the housing portion and the duct portion are arranged in the second direction such that the temperature detection portion is located therebetween, and
a restriction portion that restricts movement of the temperature detection portion toward a duct portion side in the second direction is configured by at least a part of the duct portion.

2. The energy storage apparatus according to claim 1, comprising an adjacent member having a main body disposed between the energy storage devices adjacent in the third direction and a convex portion extending from the main body toward the one side of the first direction,
wherein the convex portion is disposed between the temperature detection portion and the duct portion in the second direction, and
the restriction portion includes the convex portion.

3. An energy storage apparatus comprising:
a plurality of energy storage devices including terminals disposed at an end on one side of a first direction, the plurality of energy storage devices being arranged in a third direction orthogonal to the first direction;
an adjacent member having a main body disposed between the energy storage devices adjacent in the third direction and a convex portion extending from the main body toward the one side of the first direction;
a busbar holding member having a housing portion that houses busbars connecting the terminals of the energy storage devices to each other, the busbar holding member being overlapped on the plurality of energy storage devices from the one side of the first direction; and
a temperature detection portion capable of detecting a temperature of the energy storage devices from the one side of the first direction,
wherein the housing portion and the convex portion are arranged in a second direction orthogonal to each of the first direction and the third direction such that the temperature detection portion is located therebetween; and
a restriction portion that restricts movement of the temperature detection portion in a direction away from the housing portion in the second direction is configured by at least the convex portion.

4. The energy storage apparatus according to claim 3, comprising a duct portion,
wherein the energy storage device includes a gas release valve disposed at the end on the one side of the first direction, at an interval from the terminal toward a convex portion side of the second direction,
the duct portion overlaps the gas release valve from the one side of the first direction and extends along the third direction, and is disposed at a position adjacent to the convex portion such that the convex portion is located between the housing portion and the duct portion in the second direction; and
the restriction portion includes a part of the duct portion.

5. The energy storage apparatus according to claim 2 or 4,
wherein the duct portion includes a wall portion extending along a direction orthogonal to the second direction and an engaged convex portion protruding from the wall portion toward a housing portion side, and
the convex portion restricts movement of the duct portion toward the one side of the first direction with respect to the adjacent member by engaging with the engaged convex portion.

6. The energy storage apparatus according to claim 5, wherein a first restriction surface of the engaged convex portion facing the housing portion side in the second direction and a second restriction surface of the convex portion facing the housing portion side in the second direction constitute a restriction surface that restricts movement of the temperature detection portion toward the duct portion side in the second direction.

7. The energy storage apparatus according to claim 6, wherein the first restriction surface and the second restriction surface are flush.
